# EUROPEAN PATENT SPECIFICATION

(11) **EP 3 409 965 B1**
(45) Date of publication and mention of the grant of the patent: **23.08.2023**
(21) Application number: 17744268.8
(22) Date of filing: 25.01.2017
(51) Int. Cl.: F16D 13/52, F16D 43/21, F16D 13/56

(54) **POWER TRANSMISSION DEVICE**
LEISTUNGSÜBERTRAGUNGSVORRICHTUNG
DISPOSITIF DE TRANSMISSION DE PUISSANCE

(30) Priority: 25.01.2016 JP 2016011589
(43) Date of publication of application: 05.12.2018
(73) Proprietor: Kabushiki Kaisha F.C.C., Hamamatsu-shi, Shizuoka 431-1394 (JP)
(72) Inventor: ISOBE, Kenichiro, Hamamatsu-shi Shizuoka 431-1304 (JP); NISHIKAWA, Junichi, Hamamatsu-shi Shizuoka 431-1304 (JP); KISHIMOTO, Naoki, Hamamatsu-shi Shizuoka 431-1304 (JP); KOBAYASHI, Yuki, Hamamatsu-shi Shizuoka 431-1304 (JP)
(74) Representative: Cohausz & Florack
(86) International application number: PCT/JP2017/002564
(87) International publication number: WO 2017/131038

(56) References cited:
- EP-A1- 2 799 734
- JP-A- 2010 053 988
- JP-A- 2010 223 296
- JP-A- 2013 104 544
- JP-A- 2013 137 039
- JP-A- 2014 126 201
- JP-Y1- S22 485

## Description

### Field of the Invention

The present invention relates to a power transmitting apparatus for selectively transmitting the rotational power of an input member to an output member or cutting-off the rotational power.

### Description of Background Art

In general, the power transmitting apparatus for a motorcycle is intended to selectively perform transmission or cutting-off of the driving power of an engine to a transmission and a driving wheel and comprises an input member connected to an engine-side, an output member connected to a transmission and a driving wheel-side, and a clutch member connected to the output member. The driving power can be transmitted by press-contacting a plurality of driving-side clutch discs and driven-side clutch discs each other or cut-off by releasing the press-contacting force acting on the driving-side clutch discs and driven-side clutch discs.

More specifically, the power transmitting apparatus of the prior art comprises, as disclosed in Patent Document 1 below, a clutch housing rotatable together with an input member and mounted thereon a plurality of driving-side clutch discs, a plurality of driven-side clutch discs arranged alternately between the driving-side clutch discs, a clutch member connected to an output member, a pressure member mounted on the clutch member axially movably relative to the clutch member for press-contacting the driving-side clutch discs and the driven-side clutch discs each other and for releasing the press-contacting force acting on them in accordance with axial movement relative to the clutch member and is structured so as to transmit or cut-off the rotational power inputted to the input member to or from the output member.

In addition, another power transmitting apparatus of the prior art has been disclosed in e.g. Patent Document 2 below. This power transmitting apparatus comprises a press-contact assisting cam means for increasing the press-contacting force between the driving-side clutch discs and the driven-side clutch discs by approach of the pressure member and the clutch member toward each other when the pressure member and the clutch member are relatively rotated under a condition in which the rotational power inputted to the input member can be transmitted to the output member; and a back-torque limiting cam means for releasing the press-contacting force between the driving-side clutch discs and the driven-side clutch discs due to separation of the pressure member and the clutch member caused by relative rotation of them when the rotation speed of the output member exceed that of the input member. Another power transmitting apparatus is known from Patent Document 3. The power transmission device disclosed in Patent Document 3 can suppress the rotational vibrations by suppressing rotation of the pressure member relative to the clutch member since the power transmitting apparatus comprises slide-suppressing members for applying sliding resistance to the clutch member when the pressure member is rotated relative to the clutch member.

### Documents of Prior Art

### Patent Documents

Patent Document 1: JP 2010-223296 A
Patent Document 2: JP 2005-325993 A
Patent Document 3: EP 2 799 734 A1

### Disclosure of the Invention

### Problems to be solved by the Invention

However, there are following problems in the power transmitting apparatus of the prior art.
Since that there would be caused a "lever feedback" phenomenon when the power transmitting apparatus is provided with both the press-contact assisting cam means and back-torque limiting cam means, it has been proposed a power transmitting apparatus only provided with the press-contact assisting cam means without the back-torque limiting cam means. However, since a relatively large clearance is required between the cam surfaces or abutment surfaces of the clutch member and the pressure member in this case due to a reason of assembly, there is a problem that abnormal noise would be caused due to interference of the abutment surfaces when a relative rotation (phase rotation) is caused between the clutch member and the pressure member by generation of the sticking torque between the driving-side clutch discs and the driven-side clutch discs when the power transmission is cut-off (clutched-off). Although such a problem is remarkable in a structure in which only the press-contact assisting cam means is installed without the back-torque limiting cam means, similar problems will be caused in structures in which both the press-contact assisting cam means and the back-torque limiting cam means are installed and none of the press-contact assisting cam means and the back-torque limiting cam means is installed if the relatively large clearance is formed between the cam surfaces or abutment surfaces of the clutch member and the pressure member.

It is, therefore, an object of the present invention to provide a power transmitting apparatus which can suppress interference between the cam surfaces or abutment surfaces of the clutch member and the pressure member even when the sticking torque would be caused between the driving-side clutch discs and the driven-side clutch discs.

### Means for achieving the object

For achieving the object of the present invention above, there is provided, according to claim 1 of the present invention, a power transmitting apparatus for transmitting a rotational power inputted to an input member to an output member or cutting-off the rotational power by press-contacting a plurality of driving-side clutch discs and a plurality of driven-side clutch discs each other or releasing the press-contacting force between them comprising a clutch housing rotatable together with the input member and mounted thereon the driving-side clutch discs; a clutch member connected to the output member and mounted thereon the driven-side clutch discs arranged between the driving-side clutch discs of the clutch housing alternately therewith; a pressure member for press-contacting the driving-side clutch discs and the driven-side clutch discs each other or releasing the press-contacting force therebetween; clutch springs applying an urging force for press-contacting the driving-side clutch discs and the driven-side clutch discs each other; and a press-contact assisting cam means for increasing the press-contacting force acting on the driving-side clutch discs and the driven-side clutch discs by causing relative rotation of the pressure member and the clutch member and bringing them close to each other when the rotational power inputted to the input member can be transmitted to the output member wherein the clutch springs apply a resisting force for resisting relative rotation between the clutch member and the pressure member when the clutch member and the pressure member are operated to the separated state and the magnitude of the resisting force is set larger than a sticking torque between the driving-side clutch discs and the driven-side clutch discs, wherein the resisting force is attained by the torsional rigidity from the spring constant of the clutch spring or torsional rigidity from the wire diameter of the clutch spring or sliding resistance of the clutch spring and wherein the power apparatus further comprising holding parts for covering and holding the outer surfaces of the clutch springs and wherein the holding parts restrict torsion of the clutch springs caused by relative rotation between the clutch member and the pressure member.

The present invention of claim 2 is a power transmitting apparatus of claim 1 further comprising a back-torque limiting cam means for releasing the press-contacting force acting on the driving-side clutch discs and the driven-side clutch discs by causing relative rotation of the pressure member and the clutch member and separating them from each other when a rotational speed of the output member exceeds that of the input member.

### Effects of the Invention

According to the present invention of claim 1, since application of a resisting force for resisting relative rotation between the clutch member and the pressure member can be attained and the magnitude of the resisting force is set larger than a sticking torque between the driving-side clutch discs and the driven-side clutch discs, it is possible to suppress interference between the cam surfaces or abutment surfaces of the clutch member and the pressure member even when the sticking torque would be caused between the driving-side clutch discs and the driven-side clutch discs.

Furthermore, since the power transmitting apparatus further comprises clutch springs applying an urging force for press-contacting the driving-side clutch discs and the driven-side clutch discs each other and the clutch springs can also apply the resisting force, the clutch springs can perform a function of suppressing interference between the cam surfaces or abutment surfaces of the clutch member and the pressure member in addition to a function of press-contacting the driving-side clutch discs and the driven-side clutch discs each other.

Additionally, since the resisting force can be attained by the torsional rigidity or sliding resistance of the clutch spring, it is possible to more easily apply the resisting force against the relative rotation between the clutch member and the pressure member.

Furthermore, since the power transmitting apparatus further comprises holding parts for covering and holding the outer surface of the clutch springs and the holding parts restrict torsion of the clutch springs caused by relative rotation between the clutch member and the pressure member, it is possible to more surely apply the resisting force against the relative rotation between the clutch member and the pressure member.

According to the present invention of claim 2, since the power transmitting apparatus further comprises a back-torque limiting cam means for releasing the press-contacting force acting on the driving-side clutch discs and the driven-side clutch discs by causing relative rotation of the pressure member and the clutch member and separating them from each other when a rotational speed of the output member exceeds that of the input member, it is possible to exhibit effects obtained by the press-contact assisting cam means or the back-torque limiting cam means and thus to effectively suppress interference between the cam surfaces or abutment surfaces of the clutch member and the pressure member even when the sticking torque would be caused between the driving-side clutch discs and the driven-side clutch discs.

### Brief description of the drawings

[Fig. 1] A longitudinal sectional view of a power transmitting apparatus according to an embodiment of the present invention;
[Fig. 2] A front elevation view showing the power transmitting apparatus of Fig. 1;
[Fig. 3] A three-aspect view showing a clutch member of the power transmitting apparatus of Fig. 1;
[Fig. 4] A perspective view showing the clutch member of the power transmitting apparatus of Fig. 1;
[Fig. 5] A three-aspect view showing a pressure member of the power transmitting apparatus of Fig. 1;
[Fig. 6] A perspective view showing the pressure member of the power transmitting apparatus of Fig. 1;
[Fig. 7] A three-aspect view showing a mount member of the power transmitting apparatus of Fig. 1;
[Fig. 8] A perspective view showing the mount member of the power transmitting apparatus of Fig. 1;
[Fig. 9] A schematic view showing an action of the press-contact assisting cam means of the power transmitting apparatus of Fig. 1; and
[Fig. 10] Experimental data showing technological advantages of the power transmitting apparatus of the present invention.

### Modes for carrying out the Invention

A preferable embodiment of the present invention will be hereinafter described with reference to the accompanying drawings.

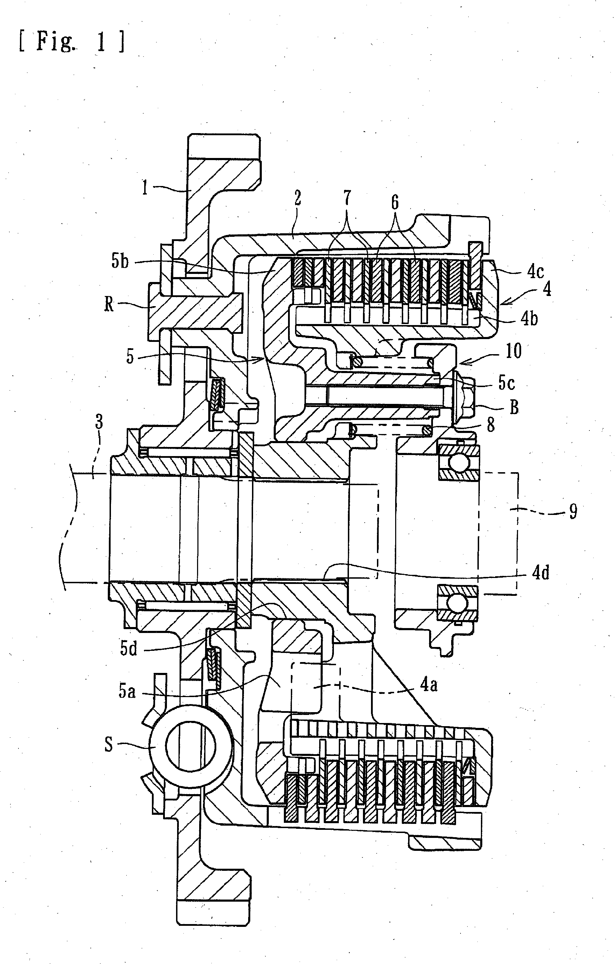

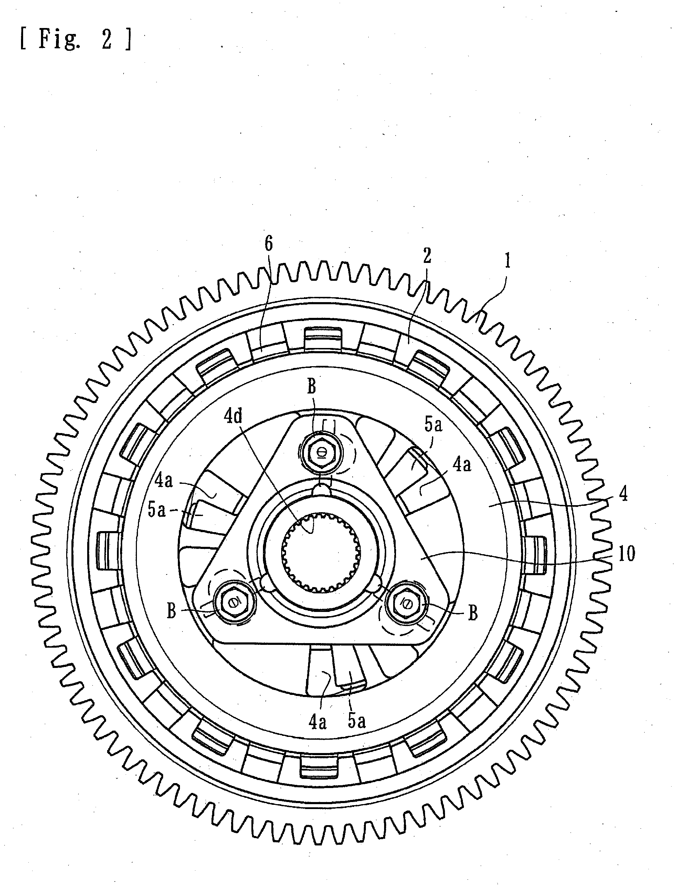

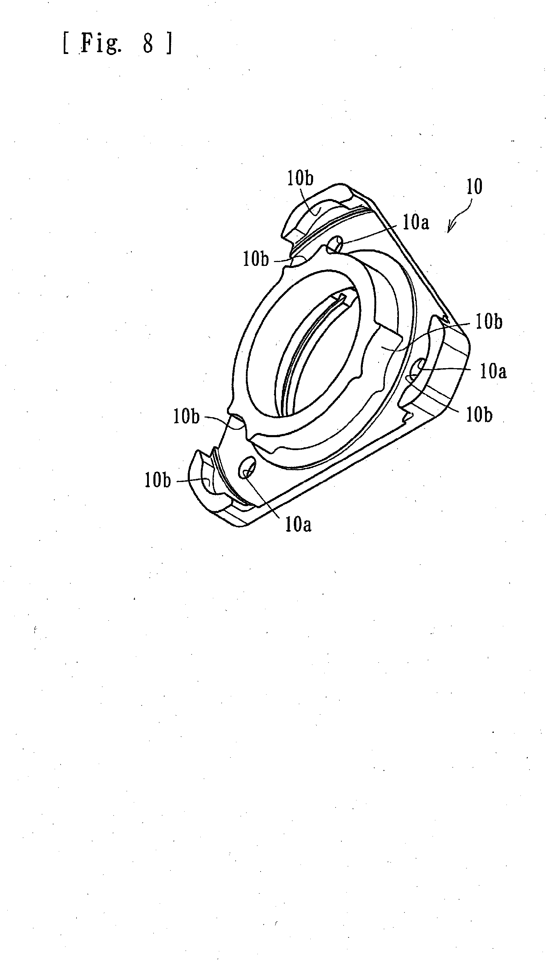

A power transmitting apparatus of the present embodiment is mounted on a vehicle such as a motorcycle to selectively transmit or cut off the driving power of an engine to a transmission or driving wheel. As shown in Figs. 1 to 8, the power transmitting apparatus mainly comprises a clutch housing 2 which is connected to a gear 1 as an input member, a clutch member 4 connected to a shaft 3 as an output member, a pressure member 5 mounted on the clutch member 4, driving-side clutch discs 6 mounted on the clutch housing 2, driven-side clutch discs 7 mounted on the clutch member 4, and a mount member 10 on which clutch springs 8 are mounted. A reference character S denotes a damper.

The gear 1 can be rotated around the shaft 3 by the driving power (rotational power) transmitted from the engine and connected to the clutch housing 2 via rivets R etc. The clutch housing 2 is formed as a cylindrical casing opened at its right-hand end of Fig.1 and a plurality of driving-side clutch discs 6 are mounted on the inner circumference of the clutch housing 2. Each of the driving-side clutch discs 6 comprises a substantially annular plate engaging with a spline formed on the inner circumference of the clutch housing 2 and is adapted to be rotated together with the clutch housing 2 and axially slidable (left-hand and right-hand directions seen in Fig. 1) along the spline.

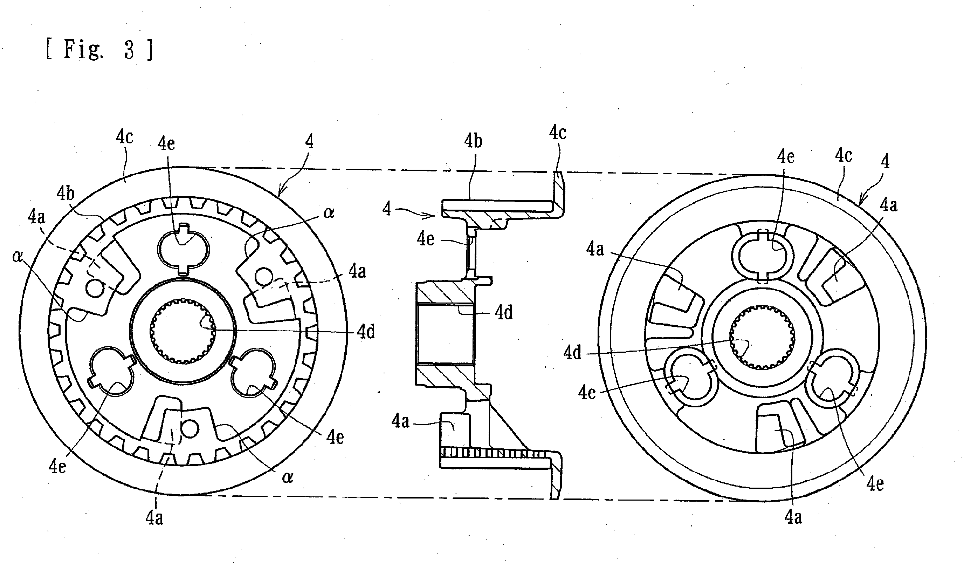

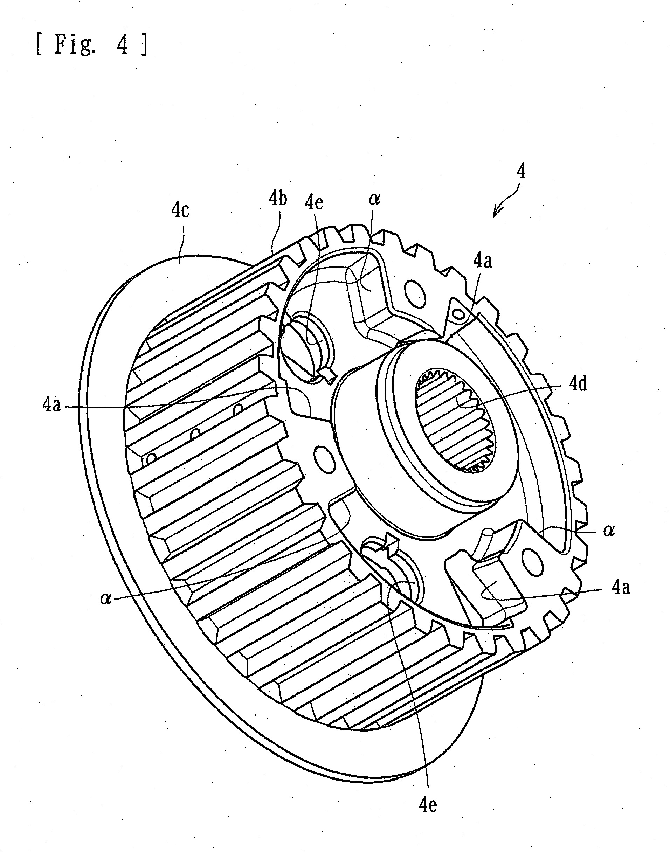

The clutch member 4 is arranged within the clutch housing 2 and comprises, as shown in Figs. 3 and 4, a cam surface 4a forming one part of a press-contact assisting cam means described later, a spline 4b formed on the outer circumference of the clutch member 4, a flanged part 4c upstanding from one end of the clutch member 4, a central bore 4d formed at the center of the clutch member 4, and apertures 4e through which the clutch springs 8 mounted on the pressure member 5 can be passed. The central bore 4d is formed on its inner circumference with a spline engaging with a spline formed on the shaft 3 so as to be rotated together with the shaft 3.

The spline 4b is formed on a substantially whole region of the outer circumference of the clutch member 4 and the driven-side clutch discs 7 are mounted thereon via spline engagement. This enables the driven-side clutch discs 7 to be axially moved relative to the clutch member 4 but to be prevented from being rotated relative to the clutch member 4. Thus, the driven-side clutch discs 7 is configured to rotate together with the clutch member 4. In addition, the driven-side clutch discs 7 are arranged between the driving-side clutch discs 6 of the clutch housing 2 alternately therewith and mutually adjacent driving-side clutch discs 6 and driven-side clutch discs 7 are connected and released by press-contacting and releasing them.

The driving-side clutch discs 6 and the driven-side clutch discs 7 are alternately arranged in a laminated state between the flanged part 4c of the clutch member 4 and the flanged part 5b of the pressure member 5 and allowed to be slid axially of the clutch member 4. Accordingly, they are press-contacted each other when the flanged part 4c and the flanged part 5b are moved toward each other to transmit rotational power of the clutch housing 2 to the shaft 3 via the clutch member 4 and the press-contacting force are released when the flanged part 4c and the flanged part 5b are moved apart from each other to cut-off transmission of the rotational power to the shaft 3.

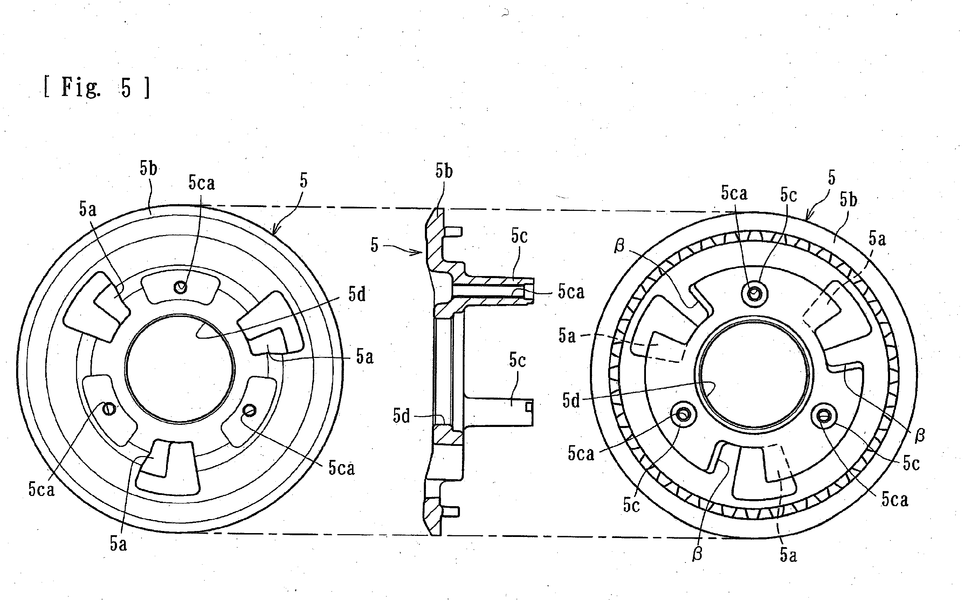

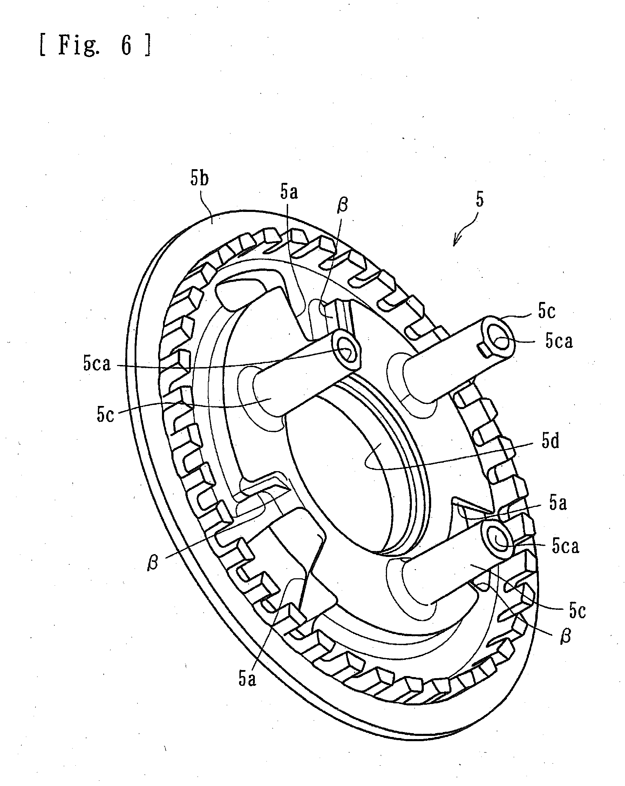

The pressure member 5 is a member to be assembled to the clutch member 4 and comprises, as shown in Figs. 5 and 6, a cam surface 5a forming one part of the press-contact assisting cam means described later, the flanged part 5b formed on the periphery of the pressure member 5, boss parts 5c and a central aperture 5d. The laminated driving-side clutch discs 6 and the driven-side clutch discs 7 are positioned between the flanged part 5b of the pressure member 5 and the flanged part 4c of the clutch member 4 under an assembled state of the pressure member 5 and the clutch member 4 with passing the clutch member 4 into the central aperture 5d of the pressure member 5.

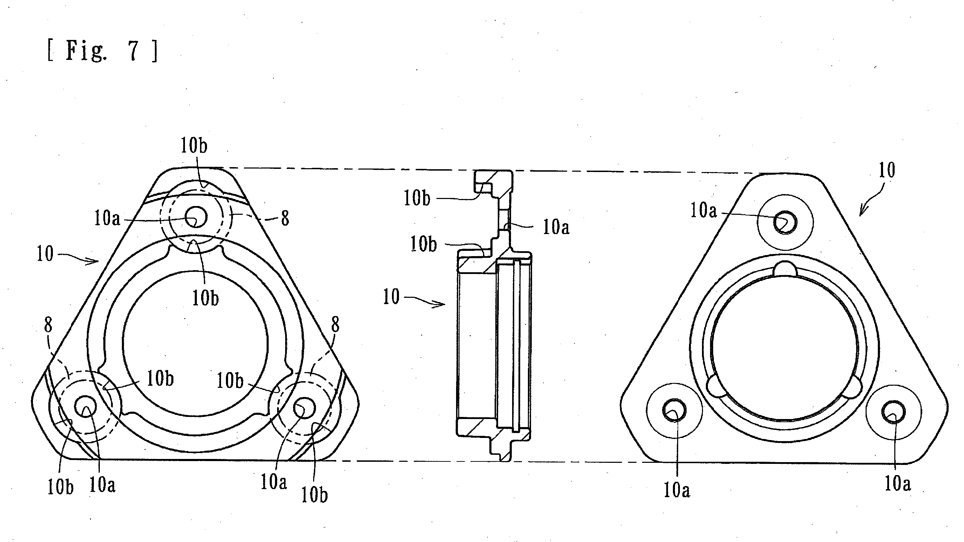

Each boss part 5c formed on the pressure member 5 is formed as a projected part toward the clutch member 4 (right-hand side of Fig. 1) and formed with a mount aperture 5ca into which a clutch bolt B is screwed. The mount member 10 is mounted on the projected ends of the boss parts 5c by fastening the clutch bolts B to the mount apertures 5ca. As shown in Fig. 7, the mount member 10 is formed with apertures 10a through which the clutch bolts B are inserted and holding parts 10b formed around the apertures 10a to hold the outer surfaces of one ends of the clutch springs 8.

On the other hand, the other ends of the clutch springs 8 are held by any parts (circumferential parts of the apertures 4e in the present embodiment) of the clutch member 4 to apply an urging force to the clutch member 4. Thus the clutch member 4 is normally urged toward the left in Fig. 1. An operating member 9 is connected to a bearing of the mount member 10 and accordingly the pressure member 5 can be moved to a direction (the left in Fig. 1) in which the pressure member 5 is moved apart away from the clutch member 4 against the urging force of the clutch springs 8 with a driver operating an operation means such as a clutch lever (not shown).

When the pressure member 5 is moved toward the left in Fig. 1, the press-contacting force between the driving-side clutch discs 6 and the driven-side clutch discs 7 is released and thus transmission of the rotational power inputted to the gear 1 and clutch housing 2 to the clutch member 4 and shaft 3 is cut-off. That is, the clutch member 4 is constituted so that it can press-contact or release the driving-side clutch discs 6 and the driven-side clutch discs 7 in accordance with the axial movement of the pressure member 5.

As shown in Figs. 3 to 6, the clutch member 4 and the pressure member 5 are formed with a cam surface 4a and a cam surface 5a comprising predetermined inclined surfaces respectively which are adapted to be opposed each other to form a press-contact assisting cam means. The press-contact assisting cam means functions to increase the press-contacting force between the driving-side clutch discs 6 and the driven-side clutch discs 7 due to approach of these clutch discs 6, 7 caused by relative rotation of the pressure member 5 and the clutch member 4 when the rotational power inputted to the clutch housing 2 (input member) can be transmitted to the shaft 3 (output member).

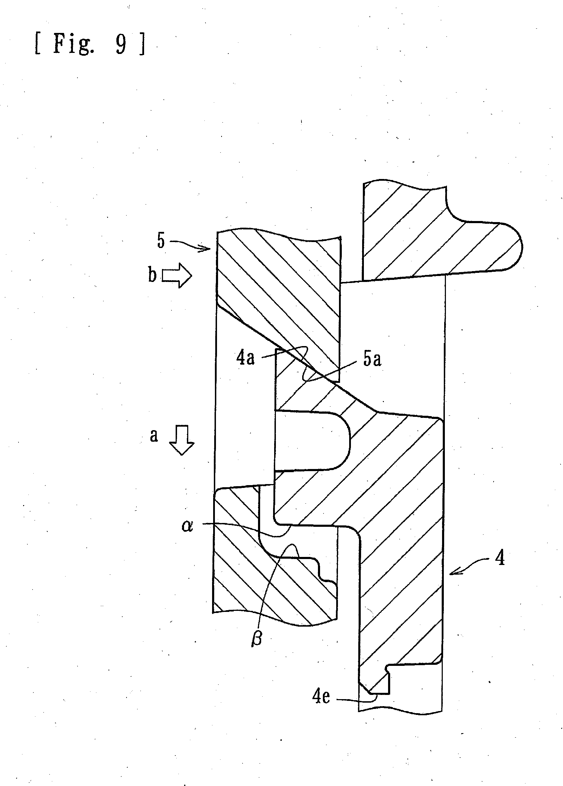

As shown in Fig. 9, since the pressure member 5 rotates toward an arrow "a" direction relative to the clutch member 4 when the rotational force inputted to the clutch housing 2 (input member) is transmitted to the shaft 3 (output member), it is constituted so that the cam surface 4a and the cam surface 5a are abutted each other and accordingly the pressure member 5 is moved toward an arrow "b" direction by a cam action of these cam surfaces 4a, 5a to increase the press-contacting force between the driving-side clutch discs 6 and the driven-side clutch discs 7. In the present embodiment, surfaces α, β positioned at opposite sides of the cam surfaces 4a, 5a constitute abutment surfaces.

As described later more in detail, it is constituted according to the present embodiment that a force resisting to the relative rotation (phase rotation) between the clutch member 4 and the pressure member 5 can be obtained and that the resisting force is set larger than the sticking torque between the driving-side clutch discs 6 and the driven-side clutch discs 7. The term "sticking torque" used in the present application is defined as a torque inputted to the pressure member 5 due to transmission of power via viscosity of oil present between the driving-side clutch discs 6 and the driven-side clutch discs 7 under conditions in which a vehicle is in a stopped state under a transmission gear position being in the "neutral" state as well as the clutch is in the "cut-off' state (the clutch member 4 and the pressure member 5 being operated to the separated state).

It is afraid that the sticking torque would cause the relative rotation (phase rotation) of the pressure member 5 relative to the clutch member 4 and accordingly the cam surface 4a of the clutch member 4 would approach the cam surface 5a and cause interference therebetween. That is, when the clutch is cut-off under a condition in which the cam surface 4a and the cam surface 5a are rotated without engaging each other in the neutral state, the relative rotation (phase rotation) of the clutch member 4 and the pressure member 5 would be caused due to difference of their inertia and thus the cam surface 4a and the cam surface 5a would be interfered with each other as shown in Fig. 9.

More specifically, the sticking torque in the present application is a torque inputted to the pressure member 5 and according to the present embodiment, the sticking torque inputted to the pressure member 5 is that generated between three clutch discs (i.e. one driven-side clutch disc 7 (leftmost clutch disc 7 in Fig. 1) fitted with the pressure member 5 and two driving-side clutch discs 6 sandwiching said one driven-side clutch disc 7). In place of the illustrated embodiment, assuming that there are two driven-side clutch discs 7 fitted with the pressure member 5, the sticking torque of the present application is that generated between five clutch discs (i.e. said two driven-side clutch discs 7 fitted with the pressure member 5 and three driving-side clutch discs 6 sandwiching and contacting with said two driven-side clutch discs 7).

As described later more in detail, according to the present embodiment since the resisting force larger than the sticking torque can be generated between the clutch member 4 and the pressure member 5 under conditions in which a vehicle is in a stopped state under a transmission gear position being in the "neutral" state as well as the clutch is in the "cut-off' state (the clutch member 4 and the pressure member 5 being operated to the separated state), it is possible to suppress generation of the relative rotation (phase rotation) between the clutch member 4 and the pressure member 5 as well as to prevent the interference of the cam surface 4a of the clutch member 4 and the cam surface 5a of the pressure member 5 which would be caused by approach of them. Accordingly, it is possible to reduce the magnitude of abnormal noise (impact noise) caused by the interference between the cam surface 4a of the clutch member 4 and the cam surface 5a of the pressure member 5 when the clutch is operated to the cut-off state.

According to the present embodiment, it is constituted that the clutch springs 8 for applying urging force to press-contact the driving-side clutch discs 6 and the driven-side clutch discs 7 each other can apply the resisting force (i.e. resisting force set larger than the sticking torque between the driving-side clutch discs 6 and the driven-side clutch discs 7). More specifically, the resisting force can be increased by increasing the torsional rigidity (the spring constant or the wire diameter) or the sliding resistance of the clutch springs 8 relative to their holding members.

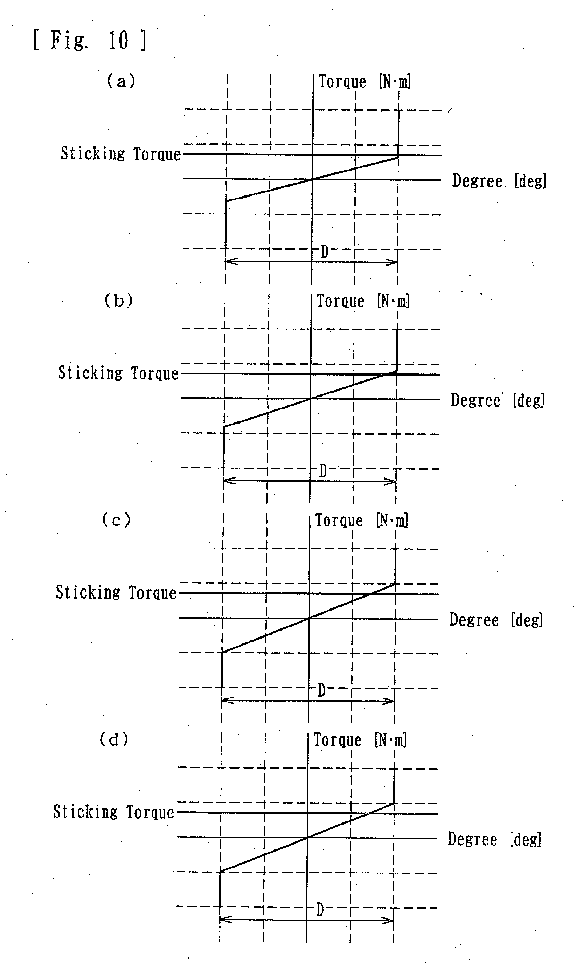

For example as shown in Fig. 10(a), the sticking torque cannot be absorbed in the cam clearance D in a power transmitting apparatus of the prior art. However, according to the power transmitting apparatus of the present embodiment, the sticking torque can be absorbed in the cam clearance D when the spring constant of the clutch springs 8 is increased (Fig. 10(b)) and when the wire diameter of the clutch springs 8 is increased (Fig. 10(c)).

In addition, according to the present embodiment, the power transmitting apparatus is provided with holding parts 10b for covering and holding the outer surface of the clutch springs 8. The holding parts 10b restrict torsion of the clutch springs 8 caused by relative rotation between the clutch member 4 and the pressure member 5. That is, each holding part 10b for holding one end of the clutch spring 8 is formed with a wall extending axially of the clutch spring 8 and having a predetermined height for covering a portion of the outer surface of the clutch spring 8.

When the holding parts 10b for holding the outer surface of the clutch springs 8 are formed according to the present embodiment, the sticking torque can be absorbed in the cam clearance D as shown in Fig. 10(d). The holding parts 10b may be arranged at other ends of the clutch springs 8 (i.e. at a clutch member 4 side).

According to the present invention, since application of a resisting force for resisting relative rotation between the clutch member 4 and the pressure member 5 can be attained and the magnitude of the resisting force is set larger than a sticking torque between the driving-side clutch discs 6 and the driven-side clutch discs 7, it is possible to suppress interference between the cam surfaces or abutment surfaces of the clutch member and the pressure member (cam surfaces 4a, 5a in the present embodiment) even when the sticking torque would be caused between the driving-side clutch discs and the driven-side clutch discs.

In addition, since the power transmitting apparatus comprises clutch springs 8 applying an urging force for press-contacting the driving-side clutch discs 6 and the driven-side clutch discs 7 each other and the clutch springs 8 can also apply the resisting force, the clutch springs 8 can perform a function of suppressing interference between the cam surfaces or abutment surfaces of the clutch member 4 and the pressure member 5 (cam surfaces 4a, 5a in the present embodiment) in addition to a function of press-contacting the driving-side clutch discs 6 and the driven-side clutch discs 7 each other. Furthermore, since the resisting force can be also obtained by the torsional rigidity of the clutch springs 8 or the sliding resistance of the clutch springs 8, it is possible to more easily apply the resising force against relative rotation between the clutch member 4 and the pressure member 5.

In addition, since the power transmitting apparatus comprises holding parts 10b for covering and holding the outer surface of the clutch springs 8 and the holding parts 10b restrict torsion of the clutch springs 8 caused by relative rotation between the clutch member 4 and the pressure member 5, it is possible to more surely apply the resisting force against the relative rotation between the clutch member 4 and the pressure member 5.

Furthermore, since the power transmitting apparatus comprises a press-contact assisting cam means (formed by the cam surfaces 4a, 5a) for increasing the press-contacting force between the driving-side clutch discs 6 and the driven-side clutch discs 7 due to approaching motion caused by relative rotation of the pressure member 5 and the clutch member 4 under a state in which the rotational power inputted to the input member (gear 1) can be transmitted to the output member (shaft 3), it is possible to exhibit effects obtained by the press-contact assisting cam means and to effectively suppress interference between the cam surfaces or abutment surfaces of the clutch member 4 and the pressure member 5 (cam surfaces 4a, 5a in the present embodiment) even when the sticking torque would be caused between the driving-side clutch discs 6 and the driven-side clutch discs 7.

In the power transmitting apparatus of the present embodiment, it may be possible to provide a back-torque limiting cam means for releasing the press-contacting force between the driving-side clutch discs 6 and the driven-side clutch discs 7 due to separating motion caused by relative rotation of the pressure member 5 and the clutch member 4 under a state in which the rotation speed of the output member (shaft 3) exceeds that of the input member (gear 1) in addition to or in place of the press-contact assisting cam means (formed by the cam surfaces 4a, 5a). In this case, it is possible to exhibit effects obtained by the press-contact assisting cam means or the back torque limiting cam means and thus to effectively suppress interference between the cam surfaces or abutment surfaces of the clutch member 4 and the pressure member 5 even when the sticking torque would be caused between the driving-side clutch discs 6 and the driven-side clutch discs 7.

Although it has been described a preferred embodiment, the present invention is not limited to such an embodiment but by the appended claims. In addition, the present invention may be applied to various kinds of multiple disc clutch type power transmitting apparatus used for automobiles, three-wheeled or four-wheeled buggies or machines for general use other than motorcycles.

### Applicability in industries

The present invention can be applied to any power transmitting apparatus having other different appearances or additional functions if the power transmitting apparatus can apply resisting force against relative rotation between the clutch member and the pressure member and the resisting force is set larger than the sticking torque between the driving-side clutch discs and the driven-side clutch discs.

### Description of reference numerals

1 gear (input member)
2 clutch housing
3 shaft (output member)
4 clutch member
4a cam surface
4b spline
4c flanged part
4d central aperture
4e aperture
5 pressure member
5a cam surface
5b flanged part
5c boss part
5ca mount aperture
5d central aperture
6 driving-side clutch disc
7 driven-side clutch disc
8 clutch spring
9 operation member
10 mount member
10a aperture
10b holding part
B clutch bolt
α abutment surface
β abutment surface

## Claims

1. A power transmitting apparatus for transmitting a rotational power inputted to an input member (1) to an output member (3) or cutting-off the rotational power by press-contacting a plurality of driving-side clutch discs (6) and a plurality of driven-side clutch discs (7) each other or releasing the press-contacting force between them comprising:
a clutch housing (2) rotatable together with the input member (1) and mounted thereon the driving-side clutch discs (6);
a clutch member (4) connected to the output member (3) and mounted thereon the driven-side clutch discs (7) arranged between the driving-side clutch discs (6) of the clutch housing (2) alternately therewith;
a pressure member (5) for press-contacting the driving-side clutch discs (6) and the driven-side clutch discs (7) each other or releasing the press-contacting force therebetween;
clutch springs (8) applying an urging force for press-contacting the driving-side clutch discs (6) and the driven-side clutch discs (7) each other; and
a press-contact assisting cam means (4a, 5a) for increasing the press-contacting force acting on the driving-side clutch discs (6) and the driven-side clutch discs (7) by causing relative rotation of the pressure member (5) and the clutch member (4) and bringing them close to each other when the rotational power inputted to the input member (1) can be transmitted to the output member (3);
**characterized in that** the clutch springs (8) apply a resisting force for resisting relative rotation between the clutch member (4) and the pressure member (5) when the clutch member (4) and the pressure member (5) are operated to the separated state and the magnitude of the resisting force is set larger than a sticking torque between the driving-side clutch discs (6) and the driven-side clutch discs (7), wherein the resisting force s attained by the torsional rigidity from the spring constant of the clutch spring or torsional rigidity from the wire diameter of the clutch spring or sliding resistance of the clutch spring (8), wherein the power apparatus further comprising holding parts (10b) for covering and holding the outer surface of the clutch springs (8) and wherein the holding parts (10b) restrict torsion of the clutch springs (8) caused by relative rotation between the clutch member (4) and the pressure member (5).

2. A power transmitting apparatus of claim 1 further comprising a back-torque limiting cam means for releasing the press-contacting force acting on the driving-side clutch discs (6) and the driven-side clutch discs (7) by causing relative rotation of the pressure member (5) and the clutch member (4) and separating them from each other when a rotational speed of the output member (3) exceeds that of the input member (1).

## Patentansprüche

1. Leistungsübertragungsvorrichtung zum Übertragen einer in ein Antriebselement (1) eingegebenen Drehkraft auf ein Abtriebselement (3) oder zum Unterbrechen der Drehkraft durch den gegenseitigen Druckkontakt mehrerer antriebsseitiger Kupplungsscheiben (6) und mehrerer abtriebsseitiger Kupplungsscheiben (7) oder zum Lösen der Druckkontaktkraft zwischen ihnen, umfassend:
ein Kupplungsgehäuse (2), das zusammen mit dem Antriebselement (1) drehbar ist und an dem die antriebsseitigen Kupplungsscheiben (6) angebracht sind;
ein mit dem Abtriebselement (3) verbundenes und darauf angebrachtes Kupplungselement (4), wobei die abtriebsseitigen Kupplungsscheiben (7) zwischen den antriebsseitigen Kupplungsscheiben (6) des Kupplungsgehäuses (2) abwechselnd mit diesen angeordnet sind;
ein Druckelement (5) für den gegenseitigen Druckkontakt der antriebsseitigen Kupplungsscheiben (6) und der abtriebsseitigen Kupplungsscheiben (7) oder zum Lösen der Druckkontaktkraft zwischen diesen;
Kupplungsfedern (8), die eine Druckkraft für den gegenseitigen Druckkontakt der antriebsseitigen Kupplungsscheiben (6) und der abtriebsseitigen Kupplungsscheiben (7) aufbringen; und
ein Druckkontakt-Unterstützungsnockenmittel (4a, 5a) zum Erhöhen der auf die antriebsseitigen Kupplungsscheiben (6) und die abtriebsseitigen Kupplungsscheiben (7) wirkenden Druckkontaktkraft, indem es eine relative Drehung des Druckelements (5) und des Kupplungselements (4) bewirkt und sie einander annähert, wenn die in das Antriebselement (1) eingegebene Drehkraft auf das Abtriebselement (3) übertragen werden kann;
**dadurch gekennzeichnet, dass** die Kupplungsfedern (8) eine Widerstandskraft aufbringen, um einer relativen Drehung zwischen dem Kupplungselement (4) und dem Druckelement (5) entgegenzuwirken, wenn das Kupplungselement (4) und das Druckelement (5) in dem getrennten Zustand betrieben werden, und die Stärke der Widerstandskraft größer als ein Haftmoment zwischen den antriebsseitigen Kupplungsscheiben (6) und den abtriebsseitigen Kupplungsscheiben (7) eingestellt ist, wobei die Widerstandskraft durch die Torsionssteifigkeit aus der Federkonstante der Kupplungsfeder (8) oder die Torsionssteifigkeit aus dem Drahtdurchmesser der Kupplungsfeder (8) oder dem Gleitwiderstand der Kupplungsfeder (8) erreicht wird, wobei die Leistungsvorrichtung ferner Halteteile (10b) zum Abdecken und Halten der Außenfläche der Kupplungsfedern (8) umfasst und wobei die Halteteile (10b) die Torsion der Kupplungsfedern (8) begrenzen, die durch die relative Drehung zwischen dem Kupplungselement (4) und dem Druckelement (5) verursacht wird.

2. Leistungsübertragungsvorrichtung nach Anspruch 1, ferner umfassend ein Nockenmittel für die hintere Drehmomentbegrenzung zum Lösen der auf die antriebsseitigen Kupplungsscheiben (6) und die abtriebsseitigen Kupplungsscheiben (7) wirkenden Druckkontaktkraft, indem es eine relative Drehung des Druckelements (5) und des Kupplungselements (4) bewirkt und sie voneinander trennt, wenn eine Drehgeschwindigkeit des Abtriebselements (3) die des Antriebselements (1) übersteigt.

## Revendications

1. Appareil de transmission de puissance destiné à la transmission d'une puissance de rotation introduite à un élément d'entrée (1) vers un élément de sortie (3) ou la coupure de la puissance de rotation par la mise en contact par pression d'une pluralité de disques d'embrayage côté entraînement (6) et d'une pluralité de disques d'embrayage côté entraîné (7) les uns avec les autres ou la libération de la force de mise en contact par pression entre eux comprenant :
un logement d'embrayage (2) pivotable conjointement avec l'élément d'entrée (1) et montés sur celui-ci les disques d'embrayage côté entraînement (6),
un élément d'embrayage (4) raccordé à l'élément de sortie (3) et montés sur celui-ci les disques d'embrayage côté entraîné (7) agencés entre les disques d'embrayage côté entraînement (6) du logement d'embrayage (2) de manière alternée avec ceux-ci,
un élément de pression (5) destiné à la mise en contact par pression des disques d'embrayage côté entraînement (6) et des disques d'embrayage côté entraîné (7) les uns avec les autres ou la libération de la force de mise en contact par pression entre ceux-ci,
des ressorts d'embrayage (8) appliquant une force de poussée destinée à la mise en contact par pression des disques d'embrayage côté entraînement (6) et des disques d'embrayage côté entraîné (7) les uns avec les autres, et
un moyen de came d'assistance à la mise en contact par pression (4a, 5a) destiné à l'accroissement de la force de mise en contact par pression agissant sur les disques d'embrayage côté entraînement (6) et les disques d'embrayage côté entraîné (7) par la provocation d'une rotation relative de l'élément de pression (5) et de l'élément d'embrayage (4) et leur rapprochement les uns des autres lorsque la puissance de rotation introduite à l'élément d'entrée (1) peut être transmise à l'élément de sortie (3),
**caractérisé en ce que**
les ressorts d'embrayage (8) appliquent une force de résistance destinée à la résistance d'une rotation relative entre l'élément d'embrayage (4) et l'élément de pression (5) lorsque l'élément d'embrayage (4) et l'élément de pression (5) sont actionnés vers l'état séparé et la magnitude de la force de résistance est réglée supérieure à un couple de serrage entre les disques d'embrayage côté entraînement (6) et les disques d'embrayage côté entraîné (7), la force de résistance étant atteinte par la rigidité de torsion provenant de la constante de ressort du ressort d'embrayage (8) ou la rigidité de torsion provenant du diamètre de fil du ressort d'embrayage (8) ou la résistance au coulissement du ressort d'embrayage (8), l'appareil de puissance comprenant en outre des pièces de maintien (10b) destinées à la couverture et au maintien de la surface extérieure des ressorts d'embrayage (8), et les pièces de maintien (10b) restreignant la torsion des ressorts d'embrayage (8) provoquée par une rotation relative entre l'élément d'embrayage (4) et l'élément de pression (5).

2. Appareil de transmission de puissance selon la revendication 1 comprenant en outre un moyen de came de limitation de couple en retour destinée à la libération de la force de mise en contact par pression agissant sur les disques d'embrayage côté entraînement (6) et les disques d'embrayage côté entraîné (7) par la provocation d'une rotation relative de l'élément de pression (5) et de l'élément d'embrayage (4) et leur séparation l'un de l'autre lorsqu'une vitesse de rotation de l'élément de sortie (3) dépasse celle de l'élément d'entrée (1).
